# EUROPEAN PATENT SPECIFICATION

(11) **EP 2 980 818 B1**
(45) Date of publication and mention of the grant of the patent: **21.02.2018**
(21) Application number: 14835011.9
(22) Date of filing: 01.07.2014
(51) Int. Cl.: H01M 2/02, H01M 2/04, H01G 11/74, H01G 11/82, H01M 10/04

(54) **ULTRACAPACITOR**
ULTRAKONDENSATOR
SUPERCONDENSATEUR

(30) Priority: 05.08.2013 KR 20130092437
(43) Date of publication of application: 03.02.2016
(60) Divisional application: 18150118.0
(73) Proprietor: Kools Co., Ltd., Anyang-si, Gyeonggi-do 431-080 (KR)
(72) Inventor: KIM, Young-yeol, Anyang-si Gyeonggi-do 431-070 (KR); OH, Min-jung, Sungnam-si Gyeonggi-do 463-010 (KR); SEO, Ju-won, Gwangmyeong-si Gyeonggi-do 423-050 (KR)
(74) Representative: Cabinet Chaillot
(86) International application number: PCT/KR2014/005831
(87) International publication number: WO 2015/020313

(56) References cited:
- JP-A- 2000 269 099
- JP-A- 2007 258 414
- JP-A- 2012 099 746
- KR-A- 20120 103 991
- US-A1- 2012 229 954

## Description

### [Technical Field]

The present invention relates to an ultracapacitor, and more particularly to an ultracapacitor, of which a manufacturing process is simplified to thereby reduce costs and improve productivity.

### [Background Art]

An ultracapacitor, i.e., a so-called super capacitor has an intermediate characteristic between an electrolytic condenser and a secondary battery.

The ultracapacitor is quickly charged and discharged as well as it is highly efficient and semi-permanent.

Accordingly, the ultracapacitor is very appropriate to not only an auxiliary power source for a mobile communication information device such as a cellular phone, a notebook computer, a personal digital assistant (PDA), etc. but also a main or auxiliary power source for an electric vehicle, a nighttime road lamp, an uninterrupted power supply (UPS) and the like which requires high capacity, and has been generally used for such a purpose.

For miniaturization, the ultracapacitor has been shaped like a cylinder as shown in Figs. 1 and 2 disclosed in Korean Patent No. 10-1159652.

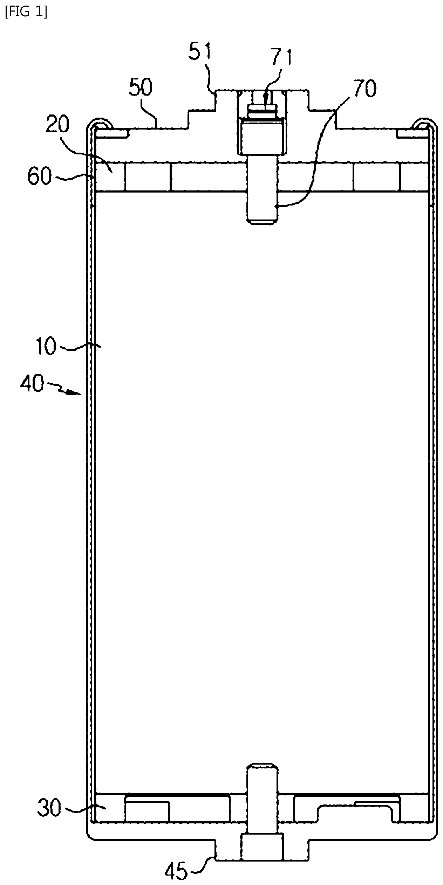

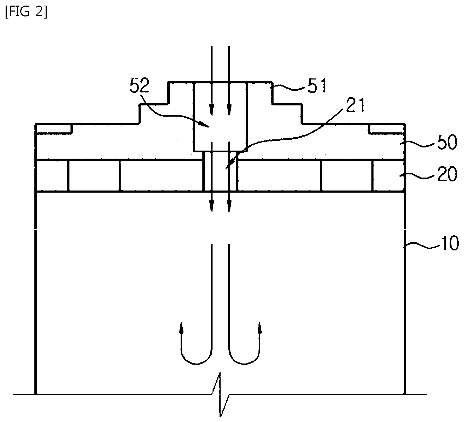

Referring to Figs. 1 and 2, a conventional cylindrical ultracapacitor includes a bare cell housing 10 in which a bare cell (not shown) shaped like a winding element and having a positive electrode, a negative electrode and a separator is accommodated, a case 40 which accommodates the bare cell housing 10 and forms an outer appearance, a first internal terminal 20 and a second internal terminal 30 which are respectively coupled to an upper portion and a lower portion of the case 40 and connected to the negative electrode and the positive electrode of the bare cell, a first external terminal 51 placed on a top of the case 40, and a second external terminal 45 placed on a bottom of the case 40.

The first internal terminal 20 is insulated from the case 40 by an insulating member 60 and electrically connected to the first external terminal 51 protruding at the center of a top plate 50. The second internal terminal 30 is electrically connected to the case 40.

A hollow 52 formed in the top plate 50 is used as not only a path for injecting an electrolyte and an air vent for a vacuum work but also a place where a safety vent 71 is installed.

In a process of impregnating the electrolyte, as shown in Fig. 2 the electrolyte is directly introduced to the bare cell accommodated in the bare cell housing 10 while passing through the hollow 52 of the top plate 50 and a hollow 21 of the first internal terminal 20 in sequence, so that the bare cell can be impregnated with the electrolyte.

U.S. patent application No. 2012/229954 A1 discloses an electrical energy storage device and a manufacturing method thereof, wherein the electrical energy storage device is provided with a metallic casing to receive a bare cell and first and second terminals located outside of the metallic casing corresponding to each electrode of the bare cell, including a plate-like member provided on at least one of the first and second terminals, an inner terminal contacting the plate-like member to form the boundary between the inner terminal and the plate-like member, and a laser welded portion formed along the boundary between the inner terminal and the plate-like member to connect the plate-like member with the inner terminal.

However, such a conventional ultracapacitor makes a manufacturing process complicated and thus causes problems of decreasing productivity and increasing costs, due to its complicated structure.

### [Disclosure]

### [Technical Problem]

An aspect of the present invention is to provide an ultracapacitor, of which a manufacturing process is simplified to thereby reduce costs and improve productivity.

### [Technical Solution]

In accordance with one aspect of the present invention, there is provided an ultracapacitor comprising: a case having a cylindrical shape of which one end is closed and the other end is opened; a bare cell placed inside the case and shaped like a winding element comprising a positive electrode, a negative electrode and a separator; a first internal terminal arranged in a closed region of the case within the case and connected to a positive electrode of the bare cell; a second internal terminal arranged in an open region of the case within the case and connected to a negative electrode of the bare cell; and an external terminal connected to the second internal terminal at an outside of the case, wherein lateral surface of the first internal terminal and the second internal terminal are flat and coupled to the case by clamping process.

Each of the first and second internal terminals comprises a case coupling plate having a bottom surface formed with a plurality of electrolyte injection holes on a surface thereof and contacting and laser-welded to the bare cell, and a flat lateral surface curved by the clamping process in a radially inward direction and coupled to the case.

Each of the first and second internal terminals may further comprise a terminal ring arranged in between the external terminal and the case coupling plate.

The lateral surface of the case coupling plate may be positioned corresponding to a lateral surface recess of one of the external terminal and the terminal ring, and then undergoes the clamping process together with the case at the corresponding position.

The external terminal, the case coupling plate and the terminal ring may be laser-welded into a single body.

The external terminal may comprise a stepped portion protruding with the width difference at one side, and the case coupling plate is fitted to the stepped portion.

The case coupling plate may be welded to the stepped portion while being fitted to the stepped portion.

### [Advantageous Effects]

According to an embodiment of the present invention, a manufacturing process is simplified to thereby have effects on reducing costs and improving productivity.

### [Description of Drawings]

Fig. 1 is a cross-section view showing a conventional ultracapacitor,
Fig. 2 is a cross-section view showing a path of impregnating the electrolyte in the ultracapacitor of Fig. 1,
Fig. 3 is an exploded perspective view of an ultracapacitor according to a first embodiment of the present invention,
Fig. 4 is a bottom view of Fig. 3,
Fig. 5 is a partial cross-section view of the ultracapacitor of Fig. 3 before a clamping process,
Fig. 6 is a partial cross-section view of the ultracapacitor of Fig. 5 after the clamping process,
Fig. 7 is a view showing a structure of a bare cell,
Figs. 8a to 8c are views showing a second embodiment and its alternative embodiment,
Fig. 9 is a partial cross-section view of the ultracapacitor of Fig. 8 after a clamping process,
Fig. 10 is an exploded perspective view of an external terminal, a case coupling plate and a terminal ring in an ultracapacitor according to a third embodiment of the present invention, and
Fig. 11 is a view showing that the members of Fig. 10 are coupled to a case.

**<Reference Numerals>**

| | |
|---|---|
| 110 : case | 120 : bare cell |
| 121 : positive electrode lead | 122 : positive electrode |
| 123 : negative electrode lead | 124 : negative electrode |
| 125 : separator | 130 : first internal terminal |
| 131 : terminal ring | 136 : case coupling plate |
| 136a : bottom surface | 136b : electrolyte injection hole |
| 136c : lateral surface | 140 : second internal terminal |
| 141 : terminal ring | 146 : case coupling plate |
| 146a : bottom surface | 146b : electrolyte injection hole |
| 146c : lateral surface | 150 : external terminal |

### [Best Mode]

Hereinafter, embodiments of the present invention will be described with reference to the accompanying drawings.

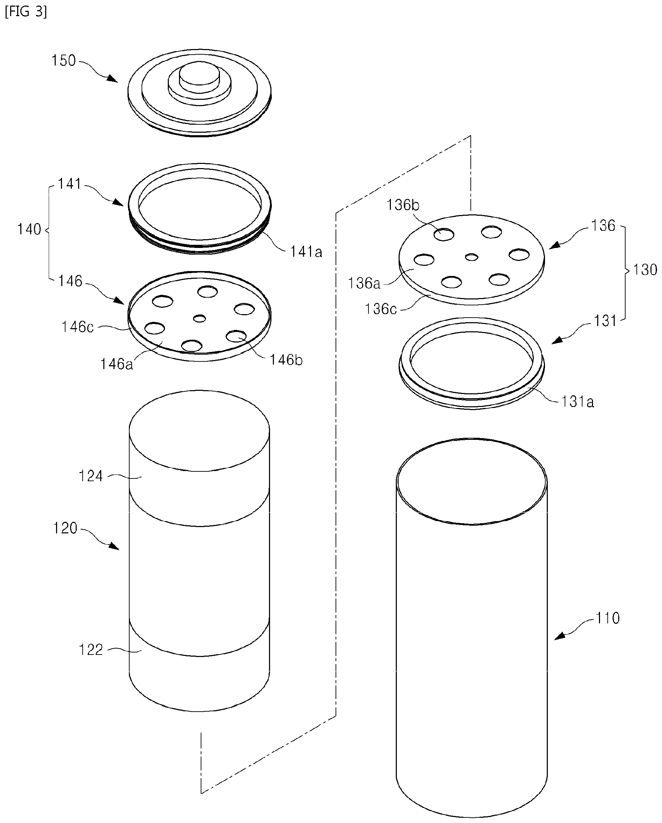

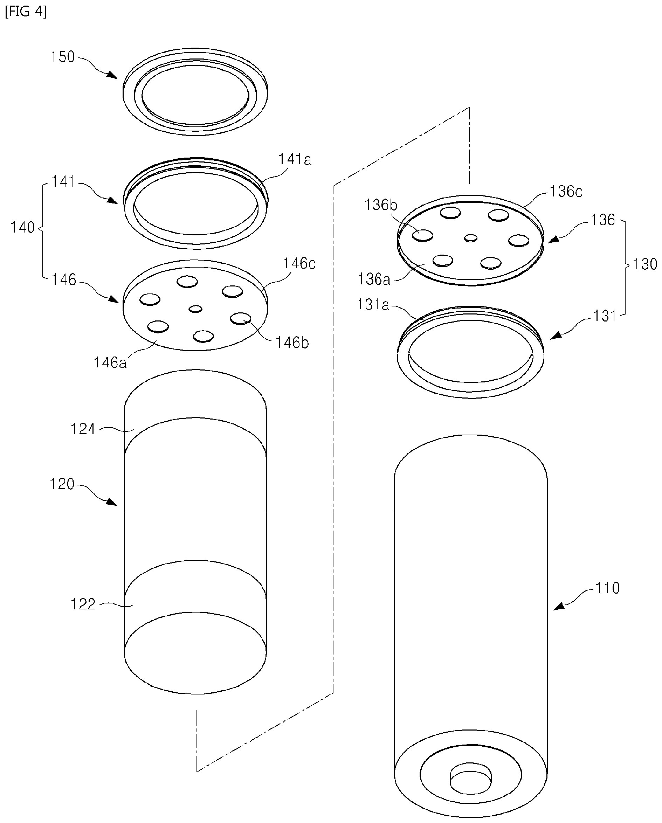

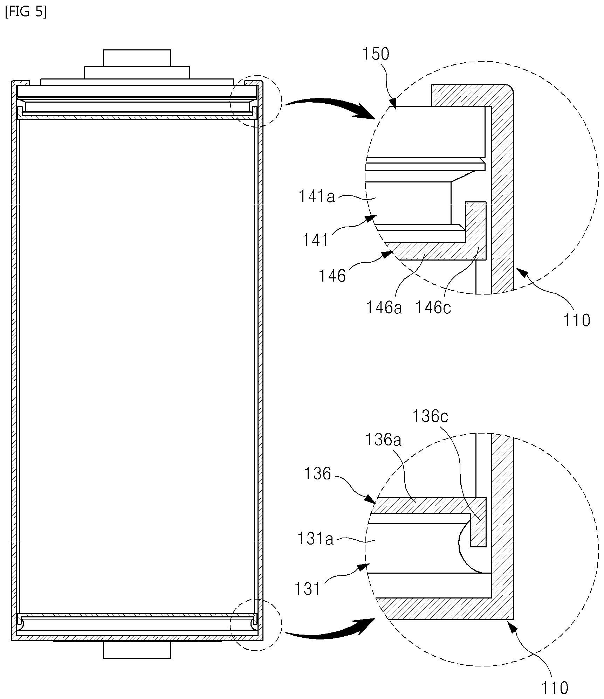

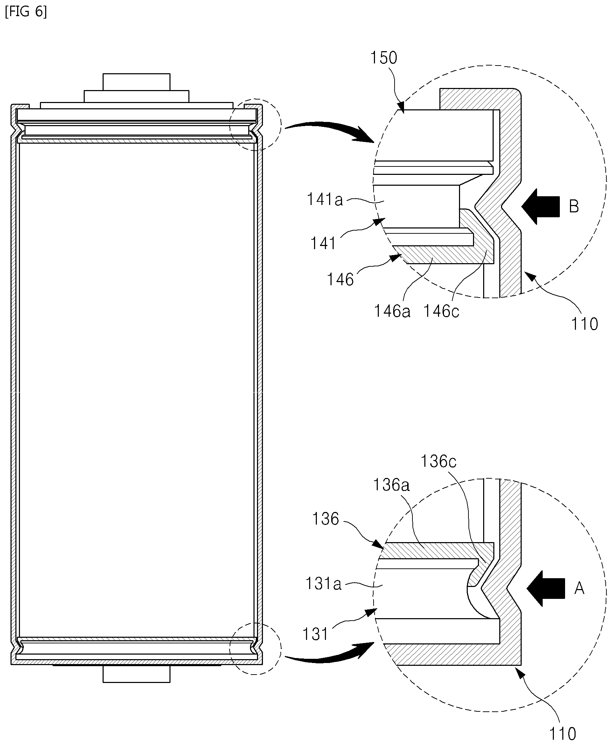

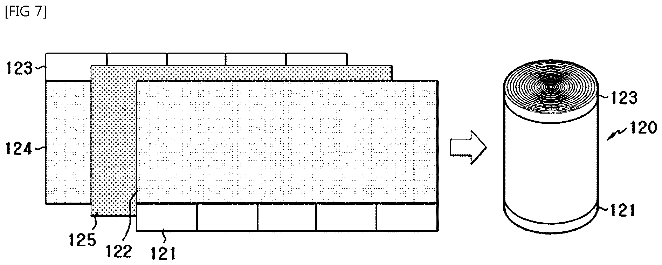

Fig. 3 is an exploded perspective view of an ultracapacitor according to a first embodiment of the present invention, Fig. 4 is a bottom view of Fig. 3, Fig. 5 is a partial cross-section view of the ultracapacitor of Fig. 3 before a clamping process, Fig. 6 is a partial cross-section view of the ultracapacitor of Fig. 5 after the clamping process, and Fig. 7 is a view showing a structure of a bare cell.

As shown therein, the ultracapacitor according to this embodiment of the present invention includes a case 110, a bare cell 120, a first internal terminal 130, a second internal terminal 140, and an external terminal 150.

The case 110 forms an outer appearance of the ultracapacitor according to this embodiment. In this embodiment, the ultracapacitor is manufactured to have a cylindrical shape, and thus the case 110 also has a cylindrical structure. This embodiment shows a small-sized ultracapacitor, but is not limited to the small size.

The case 110 may be manufactured with metal or a synthetic resin. In this embodiment, the case 110 may be made of aluminum or aluminum alloy.

The case 110 applied to the ultracapacitor according to this embodiment has a cylindrical structure of which one end is open but the other end is closed. Therefore, the ultracapacitor is easily manufactured since the foregoing elements are put into the case 110 and the open end of the case 110 is then placed at the external terminal 150.

The bare cell 120 is a so-called electrode device. As shown in Fig. 7, the bare cell 120 is formed by winding together a positive electrode 122 having a positive electrode lead 121, a negative electrode 124 having a negative electrode lead 123, and a separator 125 arranged between the positive electrode 122 and the negative electrode 124 and electrically disconnecting the positive electrode 122 and the negative electrode 124.

The positive electrode 122 has an active material layer that includes a metallic current-collector and porous activated carbon, and connects with the positive electrode lead 121 at one side thereof. The positive electrode lead 121 may be provided separately from and connected to the positive electrode 122, or may be integrated with the positive electrode 122. The negative electrode 124 and the negative electrode lead 123 may also have a separated or integrated type structure.

The current-collector may be generally provided in the form of a metal foil. The active material layer may be provided by spreading and coating both sides of the metallic current-collector with activated carbon. The active material layer is to store electric energy of the positive electrode and the negative electrode, and the current-collector serves as a moving passage of electric charges discharged from or supplied to the active material layer.

The separator 125 for restricting electronic conductivity between the positive electrode 122 and the negative electrode 124 is arranged in between the positive electrode 122 and the negative electrode 124 stacked in sequence, and the case 110 with the bare cell 120 is filled with an electrolyte.

The porous active material layer includes micro pores having an almost spherical shape so as to have a large surface area, and serves as an active material in both the positive electrode 122 and the negative electrode 124 so that the surfaces of the pores can contact the electrolyte.

If voltage is applied to the positive electrode 122 and the negative electrode 124, positive ions and negative ions included in the electrolyte respectively move to the positive electrode 122 and the negative electrode 124 and are infiltrated into the fine pores of the porous active material layer.

In this embodiment, the first and second internal terminals 130 and 140 both have the same structure except only their arranged positions.

First, the first internal terminal 130 is arranged in a closed region of the case 110 within the case 110, and electrically connected to the positive electrode lead 121 of the positive electrode 122 of the bare cell 120. For example, the first internal terminal 130 is connected to the positive electrode 121 by laser welding.

In this embodiment, the first internal terminal 130 includes two elements, i.e., a terminal ring 131 and a case coupling plate 136.

The terminal ring 131 is arranged in between the external terminal 150 and the case coupling plate 136. A lateral surface of the terminal ring 131 is formed with a recess 131a to be coupled with the case 110 by a clamping process.

The case coupling plate 136 includes a bottom surface 136a and a lateral surface 136c. A flat surface of the bottom surface 136a is formed with a plurality of electrolyte injection holes 136b. The electrolyte injection holes 136b are arranged at equidistant intervals along a circumferential direction of the bottom surface 136a of the case coupling plate 136. Alternatively, a single electrolyte injection hole 136b may be formed. The bottom surface 136a of the case coupling plate 136 and the bare cell 120 are in contact with each other and coupled by the laser welding.

For reference, a metal plate has to be thin so as to be applied to the laser welding. Therefore, the first internal terminal 130 according to this embodiment is divided into two elements of the terminal ring 131 and the case coupling plate 136, and one of the elements related to the welding, i.e. the case coupling plate 136 is made of a thin plate.

In this case, the terminal ring 131 can be manufactured as thick as required, whereas the case coupling plate 136 has to be thin. Therefore, there is no difficulty in the processes, and it is thus possible to reduce defects. For example, the case coupling plate 136 is thinly manufactured to have a thickness of 0.1∼1.5mm to thereby facilitate the laser welding. The laser welding may be applied to the entire surface of the case coupling plate 136 except the electrolyte injection holes 136b.

The lateral surface 136c of the case coupling plate 136 is flat as shown in Figs. 3 to 5 in an initial state, but curved by the clamping process A in a radially inward direction as shown in Fig. 6 when coupled to the case 110. Of course, the lateral surface 136c of the case coupling plate 136 may be more or less curved depending on a degree of clamping process. With this structure, it is advantageous to the manufacture convenient.

Next, the second internal terminal 140 is arranged in an open region of the case 110 within the case 110, and electrically connected to the negative electrode lead 123 of the negative electrode 124 of the bare cell 120.

As the drawings show, the first internal terminal 130 and the second internal terminal 140 have the same structure and are arranged in opposite directions. That is, the second internal terminal 140 also includes a terminal ring 141, and a case coupling plate 146.

A lateral surface of the terminal ring 141 is formed with a recess 141a to be coupled with the case 110 by the clamping process.

Further, the case coupling plate 146 includes a bottom surface 146a formed with a plurality of electrolyte injection holes 146b, and a lateral surface 146c formed to be flat. The lateral surface 146c is flat as shown in Figs. 3 to 5 in an initial state, but curved by the clamping process B in a radially inward direction as shown in Fig. 6 when coupled to the case 110. As described above, the lateral surface 146c of the case coupling plate 146 may be more or less curved depending on a degree of clamping process. When the clamping process is applied to the case and the internal components shown in the cross-section view of Fig. 6, a seal and an insulator are interposed. However, the seal and the insulator will be not shown since they are publicly known. Likewise, these will be omitted in the following drawings.

The external terminal 150 is arranged at an outer side of the open region of the case 110 and coupled to the second internal terminal 140. Later, an end of the open region of the case 110 is arranged in the external terminal 150.

A method of manufacturing the ultracapacitor with this configuration will be described.

The first internal terminal 130, the bare cell 120, and the second internal terminal 140 are sequentially put into the case 110, a bottom of which is closed, and then welded together.

Next, the external terminal 150 is coupled to the second internal terminal 140.

If the foregoing preparation is completed, the case 110 undergoes the clamping process in the direction of arrows A and B shown in Fig. 6.

Then, the lateral surfaces 136c and146c of the case coupling plates 136 and 146 provided in the first and second internal terminal 130 and140 positioned at the clamping process A and B are respectively curved toward the recesses 131a and 141a of the terminal rings 131 and 141 and thus coupled to the case 110, thereby simply manufacturing the ultracapacitor.

According to this embodiment with such a structure, the manufacturing process is simplified, thereby reducing costs and improving productivity.

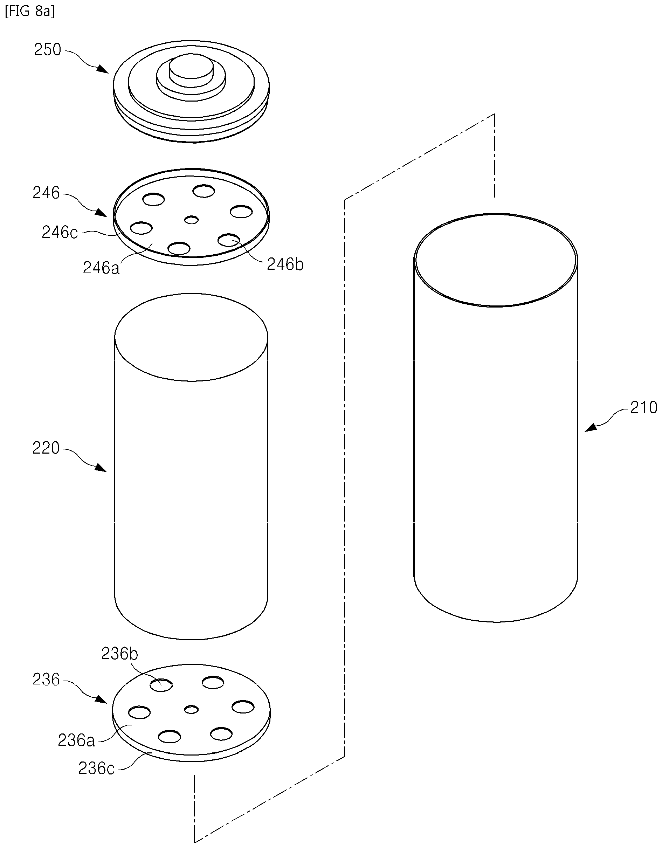

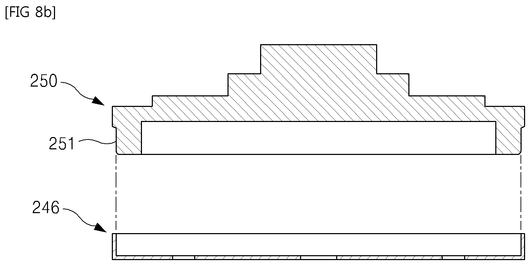

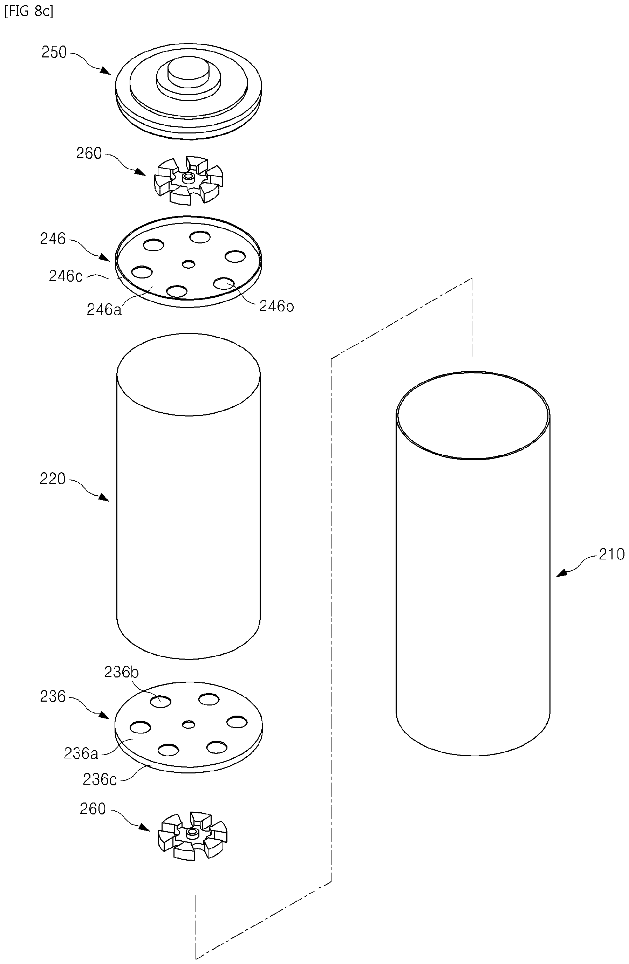

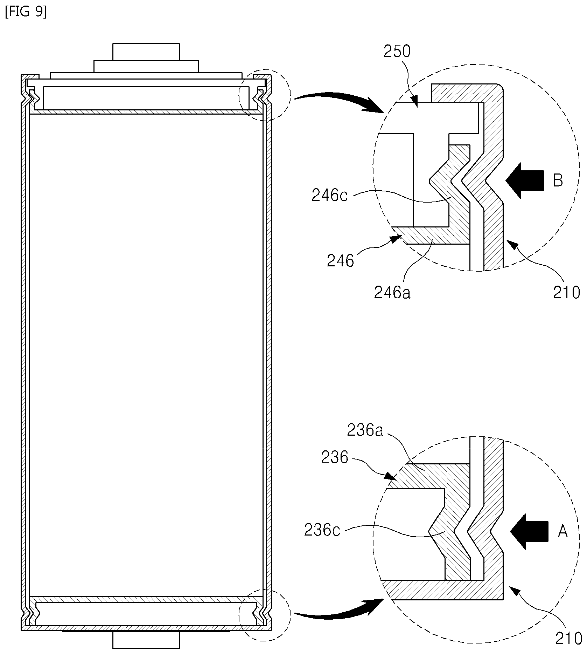

Fig. 8a is an exploded perspective view of an ultracapacitor according to a second embodiment of the present invention, Fig. 8b is a cross-section view of the external terminal 250 and the second case coupling plate 246, and Fig. 8c is an alternative embodiment to Fig. 8a. Fig. 9 is a partial cross-section view of the ultracapacitor of Fig. 8 after the clamping process.

As shown therein, the ultracapacitor according to this embodiment includes the case 110, the bare cell 120, a first case coupling plate 236 to be used as the first internal terminal, a second case coupling plate 246 to be used as the second internal terminal, and an external terminal 250.

In this embodiment, the foregoing terminal rings 131 and 141 are excluded and only the first and second case coupling plates 236 and 246 are used as the first internal terminal and the second internal terminal, respectively.

The first and second case coupling plates 236 and 246 respectively include bottom surfaces 236a and 246a having a plurality of electrolyte injection holes 236b and 246b, and lateral surfaces 236c and 246c formed to be flat. The lateral surfaces 236c and 246c are flat in an initial state, but curved by the clamping process A and B in a radially inward direction as shown in Fig. 9 when coupled to the case 210. Of course, the lateral surfaces 236c and 246c may be more or less curved depending on a degree of clamping process.

Fig. 8b shows the cross-section of the external terminal 250 and the second case coupling plate 246 of Fig. 8a, in which the external terminal 250 is formed with a stepped portion 251 protruding with the width difference at one side and fitted to the second case coupling plate 246. Alternatively, the second case coupling plate 246 and the stepped portion 251 may additionally undergo the laser welding in the state that they are fitted to each other. In this case, the coupling between the second case coupling plate 246 and the stepped portion 251 is strengthened.

Fig. 8c is an alternative embodiment for the second embodiment shown in Fig. 8a, and shows that a reinforcing piece 260 is provided for reinforcing the first case coupling plate 236 or the second case coupling plate 246. The reinforcing piece 260 may be coupled by inserting its partial protrusion into a central through hole of the first case coupling plate 236 and/or the second case coupling plate 246, and at least the second case coupling plate 246 may be reinforced by inserting the reinforcing piece 260 therein.

According to this embodiment with such a structure, the manufacturing process is simplified, thereby reducing costs and improving productivity.

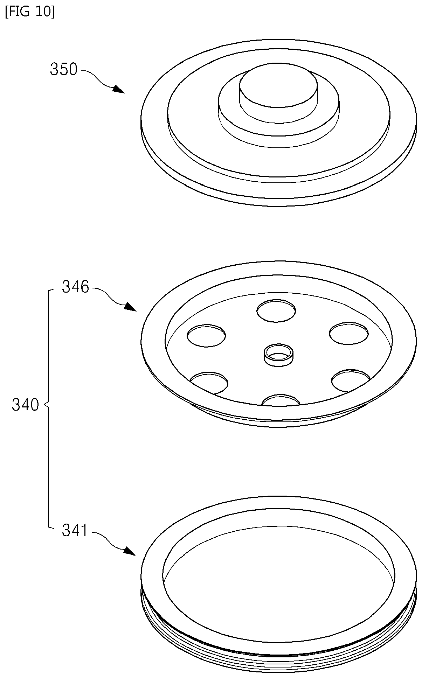

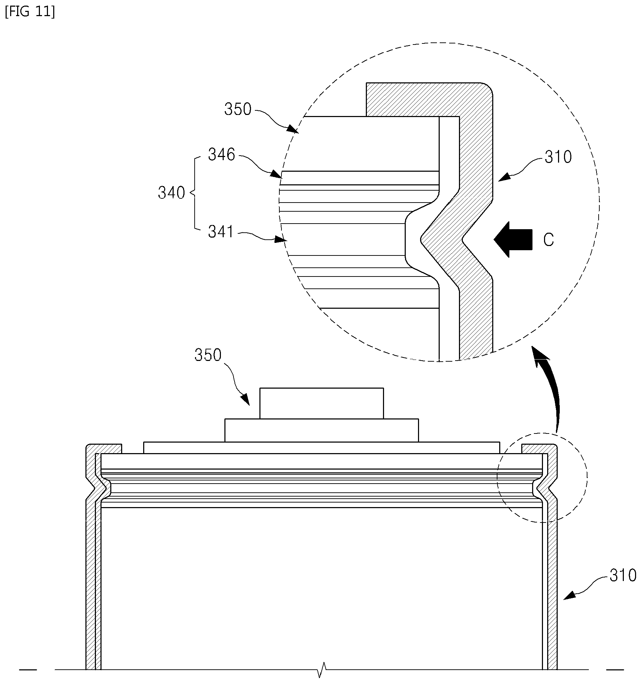

Fig. 10 is an exploded perspective view of an external terminal, a case coupling plate and a terminal ring in an ultracapacitor according to a third embodiment of the present invention, and Fig. 11 is a view showing that the members of Fig. 10 are coupled to a case.

As shown therein, in the state that a case coupling plate 346 and a terminal ring 341 forming a second internal terminal 340, and an external terminal 350 are arranged with the bare cell, they are welded into a single body by the laser welding.

First, the case coupling plate 346 is previously laser-welded to the bare cell, and then the terminal ring 341 and the external terminal 350 are arranged in sequence so that the case coupling plate 346, the terminal ring 341 and the external terminal 350 can be laser-welded into a single body. Then, they are inserted as a single body into the case 310 and coupled to the case 310 by the clamping process C.

According to this embodiment with such a structure, the manufacturing process is simplified, thereby reducing costs and improving productivity.

## Claims

1. An ultracapacitor comprising:
a case (110 ; 210) having a cylindrical shape of which one end is closed and the other end is opened;
a bare cell (120 ; 220) placed inside the case and shaped like a winding element comprising a positive electrode (122), a negative electrode (124) and a separator (125);
a first internal terminal (130) arranged in a closed region of the case (110 ; 210) within the case (110 ; 210) and connected to a positive electrode (122) of the bare cell (120 ; 220);
a second internal terminal (140) arranged in an open region of the case (110 ; 210) within the case (110 ; 210) and connected to a negative electrode (124) of the bare cell (120 ; 220); and
an external terminal (150 ; 250) connected to the second internal terminal (140) at an outside of the case (110 ; 210),
**characterized in that** each of the first and second internal terminals (130, 140) comprises a case coupling plate (136, 146 ; 236, 246) having a flat bottom surface (136a, 146a ; 236a, 246a) formed with a plurality of electrolyte injection holes (136b, 146b ; 236b, 246b) on a surface thereof, and a lateral surface (136c, 146c ; 236c, 246c) arranged perpendicularly along an outer circumference of the bottom surface (136a, 146a ; 236a, 246a),
the bottom surface (136a, 146a ; 236a, 246a)) of the case coupling plates (136, 146 ; 236, 246) is in contact with and laser-welded to the bare cell (120 ; 220), and the lateral surface (136c, 146c ; 236c, 246c) of the case coupling plates (136, 146 ; 236, 246) is formed in a flat surface, and
the lateral surfaces of the case coupling plate (136 ; 236) of the first internal terminal (130) and of the case coupling plate (146 ; 246) of the second internal terminal (140) are curved in a radially inward direction and coupled to the case (110; 210) by clamping process.

2. The ultracapacitor according to claim 1, wherein each of the first and second internal terminals (130, 140) further comprises a terminal ring (131, 141) arranged in between the closed region of the case (110) or the external terminal (150) and the case coupling plate (136, 146).

3. The ultracapacitor according to claim 2, wherein the lateral surface (136c, 146c) of the case coupling plate (136, 146) is positioned corresponding to a lateral surface recess (131a, 141a) of one of the external terminal (150) and the terminal ring (131, 141), and then undergoes the clamping process together with the case (110) at the corresponding position.

4. The ultracapacitor according to claim 2, wherein the external terminal (150), the case coupling plate (136, 146) and the terminal ring (131, 141) are laser-welded into a single body.

5. The ultracapacitor according to claim 1, wherein the external terminal (250) comprises a stepped portion (251) protruding with the width difference_at one side, and the case coupling plate (246) is fitted to the stepped portion (251).

6. The ultracapacitor according to claim 5, wherein the case coupling plate (246) is welded to the stepped portion (251) while being fitted to the stepped portion (251).

## Patentansprüche

1. Ultrakondensator mit:
einem Gehäuse (110 ; 210) mit einer zylindrischen Form, dessen eines Ende geschlossen ist und das andere Ende geöffnet;
einer Rohzelle (120 ; 220), die in dem Gehäuse platziert und wie ein Wickel geformt ist, mit einer positiven Elektrode (122), einer negativen Elektrode (124) und einem Separator (125) ;
einer ersten internen Klemme (130), die in einem geschlossenen Bereich des Gehäuses (110 ; 210) innerhalb des Gehäuses (110 ; 210) angeordnet und mit einer positiven Elektrode (122) der Rohzelle (120 ; 220) verbunden ist;
einer zweiten internen Klemme (140), die in einem offenen Bereich des Gehäuses (110 ; 210) innerhalb des Gehäuses (110 ; 210) angeordnet und mit einer negativen Elektrode (124) der Rohzelle (120 ; 220) verbunden ist; und
einer externen Klemme (150 ; 250), die mit der zweiten internen Klemme (140) an einer Außenseite des Gehäuses (110 ; 210) verbunden ist,
**gekennzeichnet dadurch, dass** jede der ersten und zweiten internen Klemme (130, 140) eine Gehäuseverbindungsplatte (136, 146 ; 236, 246) umfasst, die eine Flachbodenoberfläche (136a, 146a ; 236a, 246a) mit einer Anzahl von Elektrolyt-Einspritzungslöchern (136b, 146b ; 236b, 246b) auf einer Oberfläche davon umfasst, und eine seitliche Oberfläche (136c, 146c ; 236c, 246c), die senkrecht entlang einem Außenumfang der Bodenfläche (136a, 146a; 236a, 246a) angeordnet ist,
wobei die Bodenfläche (136a, 146a ; 236a, 246a) der Gehäuseverbindungsplatten (136, 146 ; 236, 246) ist in Kontakt mit der Rohzelle (120 ; 220) und daran lasergeschweißt ist, und die seitliche Oberfläche (136c, 146c ; 236c, 246c) der Gehäuseverbindungsplatten (136, 146 ; 236, 246) ist in einer ebenen Fläche gebildet, und
die seitlichen Oberflächen der Gehäuseverbindungsplatte (136 ; 236) der ersten internen Klemme (130) und der Gehäuseverbindungsplatte (146 ; 246) der zweiten internen Klemme (140) sind radial nach innen gebogen und mit dem Gehäuse (110 ; 210) durch ein Klemmverfahren verbunden.

2. Ultrakondensator nach Anspruch 1, wobei jede der ersten und zweiten internen Klemme (130, 140) des Weiteren einen Klemmring (131, 141) umfasst, der zwischen dem geschlossenen Bereich des Gehäuses (110) oder der externen Klemme (150) und der Gehäuseverbindungsplatte (136, 146) angeordnet ist.

3. Ultrakondensator nach Anspruch 2, wobei die Seitenfläche (136c, 146c) der Gehäuseverbindungsplatte (136, 146) entsprechend einer Seitenflächenaussparung (131a, 141a) der externen Klemme (150) oder des Klemmrings (131, 141) positioniert ist, und dann dem Klemmverfahren unterzogen wird, zusammen mit dem Gehäuse (110) in der entsprechenden Position.

4. Ultrakondensator nach Anspruch 2, wobei die externe Klemme (150), die Gehäuseverbindungsplatte (136, 146) und der Klemmring (131, 141) in einen einzigen Körper lasergeschweißt sind.

5. Ultrakondensator nach Anspruch 1, wobei die externe Klemme (250) ein abgestuftes Teil (251) umfasst, das mit dem Breitenunterschied an einer Seite vorspringt, und die Gehäuseverbindungsplatte (246) ist an dem abgestuften Teil (251) angebracht.

6. Ultrakondensator nach Anspruch 5, wobei die Gehäuseverbindungsplatte (246) an das abgestufte Teil (251) geschweißt wird, während sie an dem abgestuften Teil (251) angebracht wird.

## Revendications

1. Supercondensateur comprenant :
un boîtier (110 ; 210) ayant une forme cylindrique dont une extrémité est fermée et l'autre extrémité est ouverte ;
une cellule nue (120 ; 220) placée à l'intérieur du boîtier et ayant la forme d'un élément à enroulement comprenant une électrode positive (122), une électrode négative (124) et un séparateur (125) ;
une première borne interne (130) agencée dans une région fermée du boîtier (110 ; 210) à l'intérieur du boîtier (110 ; 210) et connectée à une électrode positive (122) de la cellule nue (120 ; 220) ;
une seconde borne interne (140) agencée dans une région ouverte du boîtier (110 ; 210) à l'intérieur du boîtier (110 ; 210) et connectée à une électrode négative (124) de la cellule nue (120 ; 220) ; et
une borne externe (150 ; 250) connectée à la seconde borne interne (140) au niveau d'une partie extérieure du boîtier (110 ; 210),
**caractérisé par le fait que** chacune des première et seconde bornes internes (130, 140) comprend une plaque de couplage au boîtier (136, 146 ; 236, 246) ayant une surface inférieure plate (136a, 146a ; 236a, 246a) comportant une pluralité de trous d'injection d'électrolyte (136b, 146b ; 236b, 246b) sur une surface de celle-ci, et une surface latérale (136c, 146c ; 236c, 246c) agencée perpendiculairement le long d'une circonférence externe de la surface inférieure (136a, 146a ; 236a, 246a),
la surface inférieure (136a, 146a ; 236a, 246a) des plaques de couplage au boîtier (136, 146 ; 236, 246) est en contact avec la cellule nue (120 ; 220) et soudée par laser à celle-ci, et la surface latérale (136c, 146c ; 236c, 246c) des plaques de couplage au boîtier (136, 146 ; 236, 246) est formée dans une surface plate, et
les surfaces latérales de la plaque de couplage au boîtier (136 ; 236) de la première borne interne (130) et de la plaque de couplage au boîtier (146 ; 246) de la seconde borne interne (140) sont incurvées dans une direction radialement vers l'intérieur et couplées au boîtier (110 ; 210) par un processus de serrage.

2. Supercondensateur selon la revendication 1, dans lequel chacune des première et seconde bornes internes (130, 140) comprend en outre un anneau de borne (131, 141) agencé entre la région fermée du boîtier (110) ou la borne externe (150) et la plaque de couplage au boîtier (136, 146).

3. Supercondensateur selon la revendication 2, dans lequel la surface latérale (136c, 146c) de la plaque de couplage au boîtier (136, 146) est positionnée en correspondance avec un renfoncement de surface latérale (131a, 141a) de l'un parmi la borne externe (150) et l'anneau de borne (131, 141), puis subit le processus de serrage conjointement avec le boîtier (110) au niveau de la position correspondante.

4. Supercondensateur selon la revendication 2, dans lequel la borne externe (150), la plaque de couplage au boîtier (136, 146) et l'anneau de borne (131, 141) sont soudés par laser en un corps unique.

5. Supercondensateur selon la revendication 1, dans lequel la borne externe (250) comprend une partie étagée (251) faisant saillie avec la différence de largeur sur un côté, et la plaque de couplage au boîtier (246) est ajustée sur la partie étagée (251).

6. Supercondensateur selon la revendication 5, dans lequel la plaque de couplage au boîtier (246) est soudée à la partie étagée (251) tout en étant ajustée sur la partie étagée (251).
